# EUROPEAN PATENT APPLICATION

(11) **EP 4 708 824 A1**
(43) Date of publication of application: **11.03.2026**
(21) Application number: 25196971.3
(22) Date of filing: 20.08.2025
(51) Int. Cl.: H04L 67/12, H04L 67/00, H04L 67/53, H04W 4/38

(54) **METHODS, DEVICES, EDGE SERVER, AND COMPUTER PROGRAM PRODUCTS FOR SERVICE DEPLOYMENT**

(30) Priority: 05.09.2024 CN 202411242270
(71) Applicant: Robert Bosch GmbH, 70442 Stuttgart (DE)
(72) Inventor: DU, Yifan, Shanghai, 200335 (CN)
(74) Representative: Isarpatent

(57) **Abstract**

Examples of the present disclosure relate to methods, devices, edge servers, and computer program products for service deployment. The method includes receiving a user input to deploy a service in a roadside system, wherein the roadside system includes a plurality of clusters located at different roadside locations and edge servers for managing the plurality of clusters. The method further comprises converting the user input into a list file in which the list file indicates a roadside service to be deployed and deployment information related to the roadside service. Further, the method further comprises deploying a roadside service using an orchestration server in the edge server based on the deployment information in the list file. As such, the examples of the present disclosure enable automated service deployment in a roadside system, which avoids the shortage of manual deployment and improves the deployment efficiency and quality of the roadside service, thereby helping improve the overall operational efficiency of the roadside service.

## Description

### Technical Field

Embodiments of the present disclosure relate to the computer field, and more particularly, to a method, device, edge server, and computer program product for service deployment.

### Background

Roadside edge computing utilizes edge devices to process and analyze data in real time at the intersection, providing efficient, low-latency services through vehicle networking technology. Roadside edge computing reduces bandwidth consumption and improves the real-time reliability of services. By installing edge computing devices by the road, this technology enables real-time processing of large amounts of data from vehicles, pedestrians, and infrastructure for faster response and greater efficiency.

Roadside edge computing is widely used in areas such as intelligent transportation, autonomous driving, vehicle network, and smart cities. It improves traffic safety and efficiency by optimizing traffic signal control and traffic management with real-time processing and analyzing data. In autonomous driving, edge computing provides a fast response to keep your drive safe. At the same time, in the construction of smart cities, it improves the efficiency of city operations and optimizes public services by monitoring environmental data.

### Summary of the Invention

Embodiments of the present disclosure provide a method, device, edge servicer, computer program product, and media for service deployment.

A first aspect of the present disclosure provides a method for service deployment. The method includes receiving a user input to deploy a service in a roadside system, wherein the roadside system encompasses a plurality of clusters located at different roadside locations and edge servers for managing the plurality of clusters, with each cluster comprising one or more nodes for performing roadside services. The method further comprises converting the user input to a list file, wherein the list file indicates a roadside service to be deployed and deployment information related to the roadside service. Further, the method further comprises deploying the roadside service with an orchestration server in the edge server based on the deployment information in the list file.

A second aspect of the present disclosure provides a device for service deployment. The device includes a user input receiving module configured to receive user inputs for deploying services in a roadside system, wherein the roadside system includes a plurality of clusters located at different roadside locations and edge servers for managing the plurality of clusters, each cluster including one or more nodes for performing roadside services. The device further comprises a list file conversion module configured to convert the user input to a list file, wherein the list file indicates a roadside service to be deployed and the deployment information related to the roadside service. The device further comprises a service deployment execution module configured to deploy the roadside service using an orchestration server in the edge server based on the deployment information in the list file.

According to a third aspect of the present disclosure, an edge server is provided. The electronic device comprises at least one processor; and a memory coupled to the at least one processor and having instructions stored thereon that, when executed by the at least one processor, cause the edge server to perform the method of the first aspect of the present disclosure.

According to the fourth aspect of the present disclosure, a computer program product is provided. The computer program product is tangibly stored on a non-transitory computer-readable medium and includes computer-executable instructions that, when executed, cause the computer to perform the steps of the method of the first aspect of the disclosure.

According to a fifth aspect of the present disclosure, a machine-readable storage medium is provided. The machine-readable storage medium has machine-executable instructions stored thereon, wherein the machine-executable instructions are executed by a processor to implement the steps of the method of the first aspect of the present disclosure.

The Summary of the Invention is intended in part to introduce a selection of concepts in a simplified form, which will be further described in the examples below. The Summary of the Invention is not intended to identify the key features or essential features of the claimed subject matter, nor is it intended to limit the scope of the claimed subject matter.

### Brief Description of Drawings

The exemplary examples of the present disclosure will be described in further detail in conjunction with accompanying drawings in order to further clarify the above-mentioned and other objectives, features, and advantages of the present disclosure, wherein in the exemplary examples of the present disclosure, the same reference number typically represents the same part.
FIG. 1 shows a schematic diagram of an exemplary environment in which the device and/or method according to examples of the present disclosure may be implemented;
FIG. 2 shows a flow chart of a method for service deployment according to examples of the present disclosure;
FIG. 3 shows a schematic diagram of a software architecture of a roadside system, consistent with examples of the present disclosure;
FIG. 4 shows a schematic diagram of a hardware structure of a roadside system, consistent with examples of the present disclosure;
FIG. 5 shows a schematic diagram of a device for service deployment according to examples of the present disclosure; and
Fig. 6 illustrates a schematic block diagram of an exemplary device according to an example that is suitable to embody the content of the present disclosure.

In the various accompanying drawings, the same or corresponding symbols represent the same or corresponding portions.

### Description of Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first," "second," etc. may refer to different or the same objects unless otherwise specified. The following may also include other clear and implied definitions, as previously described, that roadside edge computing plays an important role in many fields. However, when deploying services for roadside edge computing in a roadside system, engineers are required to manually deploy on each edge device node at each intersection, resulting in a large deployment workload, low efficiency and prone to errors.

To this end, examples of the present disclosure present a scheme for deploying services in a roadside system, which enables the automated deployment of services in the roadside system, avoiding deficiencies in manual deployment. First, a user input is received to deploy a service in a roadside system and then the user input is replaced by a list file indicating the roadside service to be deployed and the deployment information related to the roadside service and then utilize an orchestration server to deploy the roadside service. As such, the examples disclosed herein enable automated service deployment in a roadside system, which avoids the shortage of manual deployment and improves the deployment efficiency and quality of roadside services, thereby helping to improve the overall operational efficiency of roadside services.

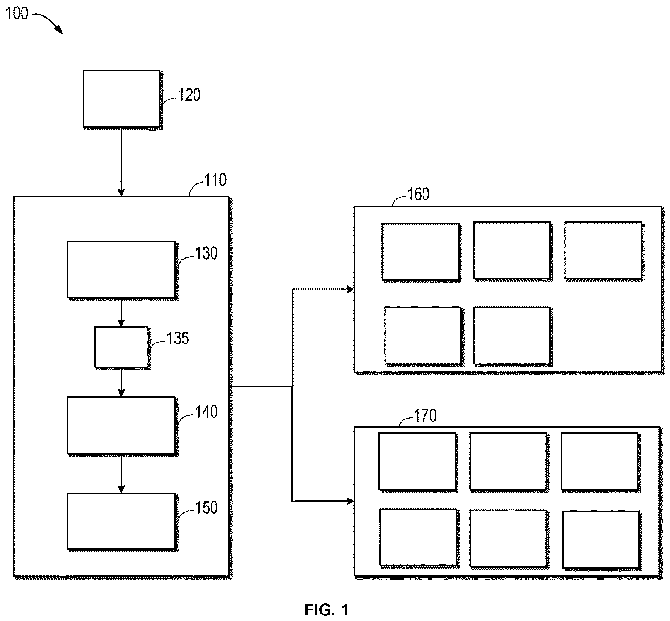

The basic principles and several exemplary implementations of the present disclosure are described below with reference to FIG. 1 to FIG. 6. It will be understood that these exemplary examples are given only to enable those skilled in the art to better understand and thereby achieve the example of the present disclosure and not to limit the scope of the present disclosure in any way.

FIG. 1 shows an exemplary environment 100 in which the device and/or method according to examples of the present disclosure may be implemented. Examples of the present disclosure relate to the deployment of roadside services in roadside systems, also referred to as roadside edge computing, a computing technology deployed along a road to provide real-time, efficient data processing and service support. By bringing computing resources closer to the data source, roadside edge computing enables low-latency, high-responsiveness data processing, reduces bandwidth consumption, and improves system reliability and efficiency. This technology is widely used in the areas of intelligent transportation systems (ITS), autonomous and assisted driving systems (ADAS/AD), intelligent parking systems and smart cities. It monitors and manages traffic flows, environmental data, and public safety in real time, improving road safety and urban management. The distributed architecture of roadside edge computing provides flexible computing power and scalability, and the ability to dynamically adjust resource allocation to real-world needs, making it an important technology for the development of smart cities and smart transportation in the future.

Referring to FIG. 1, the exemplary environment 100 may include an edge server 110, which may be a machine deployed within an intersection or traffic signal control cassette, and may be used to manage service deployment of a roadside system. In some examples, the edge server 110 may also be a node on a plurality of clusters in roadside service. As shown in FIG. 1, the edge server 110 may receive a user input 120, which may indicate information related to service deployment. In the examples disclosed herein, the user needs to provide user input 120 to deploy the target service to the desired cluster and node, without manually manipulating the service on each node or machine at each intersection.

The edge server 110 may include a coordinator 130, a cluster agent 140, and an orchestration server 150. In some examples, the coordinator 130 may be utilized to receive the user input 120 and convert the user input 120 to a list file 135. For example, the list file 135 indicates a roadside service to be deployed and deployment information related to the roadside service. For example, roadside services may include, but are not limited to, intelligent traffic signal control, autonomous driving vehicle assistance, and traffic image collection services, among others. The user can specify in the user input [sic:] 130 what roadside service is to be deployed as a user-friendly and what roadside location the service needs to be deployed to and the parameters associated with the service (e.g., image resolution, machine configuration, etc.). The coordinator 130 may convert the user input 120 to a list file 135 that is in program-readable form for ease of deployment of the service.

The cluster agent 140 may apply the list file 135 to the orchestration server 150. In some examples, the cluster agent 140 may apply the list file 135 to the orchestration server 150 by calling the application interface API. The orchestration server 150 may perform a roadside service deployment according to the deployment information in the list file 135. For example, the orchestration server 150 may configure the service to be deployed based on the deployment information and then deploy to one or more nodes specified in the deployment information.

FIG. 1 shows the clusters 160 and the clusters 170, each of which is located at different roadside locations (e.g., at different intersections), and each of which has multiple nodes deployed in each cluster. From a hardware perspective, each cluster may correspond to a chassis installed at each intersection, with multiple edge machines in each chassis corresponding to nodes, performing specific roadside services with and one or more roadside services may be deployed on each machine. It can be seen that machines and services are deployed at intersections and therefore have significant advantages in their execution, including low latency and high response speed, as data can be processed locally in real time, reducing transmission time and bandwidth consumption while increasing reliability and stability of the system, and local data processing increases privacy and security. It will be understood that only two clusters are shown herein as examples, and that the roadside system in examples of the present disclosure may include more or fewer clusters, and each cluster may include more or fewer nodes, the present disclosure is not to be limited herein.

As such, the examples of the present disclosure enable the automated deployment of roadside services in the roadside system, thereby avoiding the shortage of manual deployment and improving the deployment efficiency and quality of roadside services, thereby helping to improve the overall operational efficiency of roadside services. It will be understood that the architecture and functions in the exemplary environment 100 are described for exemplary purposes only, without implying any limitation to the scope of the present disclosure. Examples of the present disclosure may also be applied to other environments having different structures and/or functions.

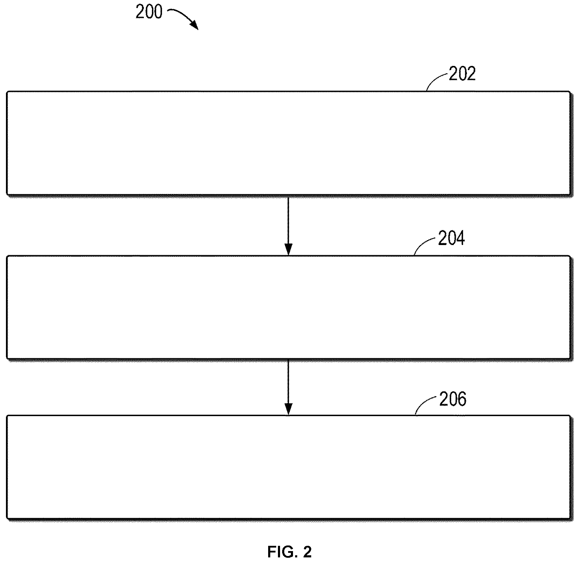

The process according to examples of the present disclosure will be described in detail below in conjunction with FIG. 2 to FIG. 6. For ease of understanding, the specific data mentioned in the following description are exemplary and are not used for defining the scope of protection of the present disclosure. It will be understood that the examples described below may also comprise additional actions not shown and/or actions that may be omitted as shown, the scope of the present disclosure being not limited in this regard.

FIG. 2 shows a flow chart of a method 200 for service deployment according to examples of the present disclosure. At block 202, a user input may be received to deploy services in a roadside system including a plurality of clusters located at different roadside locations and edge servers for managing a plurality of clusters, each cluster including one or more nodes for performing roadside services. In connection with FIG. 1, the edge server 110 may receive user input 120 for deploying services in a roadside system, wherein the roadside system includes a plurality of clusters (e.g., clusters 160 and 170) located at different roadside locations and edge servers 110 for managing multiple clusters, each cluster includes one or more nodes for performing roadside services.

At block 204, the user input may be converted to a list file where the list file indicates a roadside service to be deployed and deployment information related to the roadside service. In connection with the description of FIG. 1, the coordinator 130 in the edge server 110 may convert the user input 120 to a list file 135 indicating a roadside service to be deployed and deployment information related to the roadside service.

At block 206, the orchestration server is used to deploy roadside services based on the deployment information in the list file. In connection with the FIG. 1, the edge server 110 may deploy a roadside service using the orchestration server 150 based on the deployment information in the list file. As such, the method 200 of the present example is capable of enabling automated service deployment in a roadside system, avoiding the shortage of manual deployment and improving the deployment efficiency and quality of the roadside service, thereby helping lift the overall operational efficiency of the roadside service.

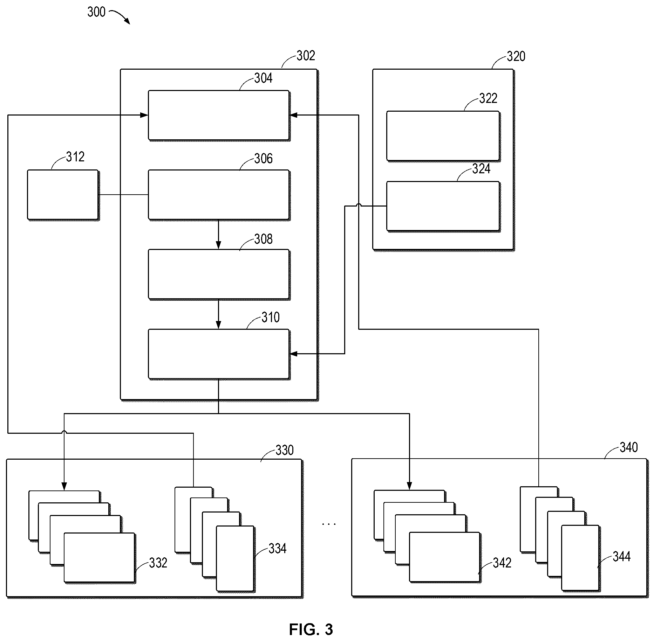

FIG. 3 shows a schematic view of a software architecture 300 of a roadside system, consistent with examples of the present disclosure. As shown in FIG. 3, the software architecture 300 may include an edge server 302, which includes a monitor 304, a coordinator 306, a cluster agent 308, and an orchestration server 310. As previously noted, the edge server 302 is used to manage clusters and their nodes in roadside services. In some examples, the edge server 302 may receive user input 312 with the coordinator 306. User input may also be referred to as user intent, whereby a user (e.g., an engineer or operator) when deploying a roadside service can automatically deploy the service simply by providing that user intent. In some examples, the user input 312 may be a structured data file that describes the cluster (i.e., grouping of nodes), nodes within the cluster (also referred to as members or hosts), services running within the cluster, and associated attributes and parameters for each service instance. In some examples, a user may define user input 312 based on a reference template for a structured data file, which may further reduce the user's workload.

In some examples, the coordinator 306 in the edge server 302 may be utilized to read the mirror address and deployment information in a mirror library of the edge server for the roadside service to be deployed from user input 312, which may include a branch cluster associated with the roadside service, a deployment node, and service parameters. In some examples, the list file may be generated based on the mirror image address, the deployment clusters, the deployment nodes, and the service parameters and the list file may be applied to the orchestration server 310. For example, the orchestration server 310 may read the parameter information in the generated list file from the cluster agent 308. The mirror library may be installed on the edge server 302 (not shown) or may be installed on the redundant server 320, such as the mirror library 322.

The mirror library is a component for storing, managing, and distributing container mirror images, which developers can push created mirror services to the mirror library, and the operations and maintenance personnel and automation systems can be deployed to pull the virtualized mirror services needed from the mirror library. A mirror address is an identifier for a particular mirror service, which typically includes a mirror library address, a namespace, a mirror name, and a mirror label. Mirror services are lightweight, independent executables that contain all the information needed to run the software, including code, run time, library, environment variables, and configuration documents. Package all the required roadside services into a mirror image and automatically pull the required roadside service from the mirror library when deploying from the roadside services to avoid manual access to services elsewhere.

In some examples, the mirror service corresponding to the roadside service may be obtained from the mirror address in the mirror library. For example, a user (engineer or operator) needs to deploy an interface image collection service, which can be acquired from a respective mirror address in the mirror library for the interface image collection service. In some examples, the mirroring service may be configured based on service parameters. For example, the service parameters are included in the list file and the acquired mirror service may be configured based on the server parameters, such as the resolution of the images in the traffic image collection service, the time interval of the acquisition, and the like.

In some examples, the mirror service may be deployed as a roadside service to a deployment node by deploying orchestration agent on the deployment node in the cluster. For example, a user may indicate in user input 312 that a traffic image collection service is to be deployed in a chassis (i.e., a deployed cluster) of one or more intersections and one or more machines (i.e., a deployed node) deployed in the chassis at the intersection. For example, the orchestration server 310 may deploy the traffic image collection service to the node where the orchestration agent 332 is located by the orchestration agent 332, where the orchestration server 310 may provide a control plane for services on the control node.

In some examples, the mirroring service may be deployed as a roadside service to a plurality of backup deployment nodes in the deployment clusters. For example, cluster 330 may include a backup node where service of node 332 may be run on when node 332 fails, which provides for redundancy of roadside services and increases the safety and reliability of the roadside system when running.

In some examples, the roadside system further comprises a plurality of backup edge servers, wherein
Each of the backup edge servers includes a mirror library and a backup orchestration server synchronized with the orchestration server. Referring to FIG. 3, a backup edge server 320, which may also be referred to as a redundant edge server. The backup edge server 320 may include a mirror library 322 and an orchestration server 324, and the orchestration server 324 synchronizes with the status of the orchestration server 310. When the edge server 302 fails, the backup edge server 320 may be utilized to replace the edge server 302 to improve the safety and reliability of the roadside system's services. In some examples, an edge server may be provided and two redundant edge servers may be provided simultaneously to improve the safety and reliability of the roadside system.

In some examples, the hardware status corresponding to the nodes of the plurality of nodes and the service status of the roadside service performed on the plurality of nodes may be acquired by a probe disposed in the node and the hardware status and service status may be displayed in the user interface. As shown in FIG. 3, a probe 334 is disposed in each node (i.e., machine) and roadside service of the cluster 330 for collecting critical data for system operation. For example, the probe 334 may collect information including hardware status (such as CPU usage, memory usage, temperature, etc.) and service status (such as service running status, log information, etc.). The probe 334 may transmit the collected data to the monitor 304 of the edge server 302. The user interface may graphically demonstrate the operational state of the roadside system, including various performance metrics for hardware and software. In some examples, the user interface is web-based and tied to the monitor 304, and the monitor 304 alerts the user when the hardware status and/or service status indicate a failure. For example, when CPU usage is above a predetermined threshold, the user may be alerted by way of a user interface based on a web page, texting, or telephone.

In some examples, the hardware state and the service state are stored in a database through a monitor in the edge server and the time series data is then displayed in the user interface by querying the database for time series data including the hardware status and the service status. For example, the monitor 304 may store the data received from the probe in a data library and may present the time series data when a user needs to query, reflecting not only the current service status, but also the history of the service status.

In some examples, when the monitor indicates that the roadside service fails, the roadside service may be restarted on the deployment node, the roadside service may be activated on one of a plurality of backup deployment nodes, or the roadside service may be migrated from the deployment node to another node in the deployment cluster. For example, with reference to FIG. 3, when the monitor 304 finds a failure in the roadside service on the node 342 in the cluster 340 through the probe 344, the roadside service may be restarted on the node 342, or the road side service may be activated on a backup node, or the roadside service may be migrated from the node 342 to other nodes in the cluster 340. In addition, the roadside services may also migrate between clusters, such as from cluster 330 to cluster 340, i.e., from a roadside location corresponding to cluster 330 to a road side location corresponding to cluster 340.

In some examples, a user may write an intent file as a user input according to the provided template and then enter an intent file into the coordinator, which may generate a list file that satisfies the intent file requirements according to the user's intent, then the cluster agent applies the list to the clusters and all services run on multiple nodes of the clusters. In addition, the user may access the system status over a web-based graphical user interface (GUI).

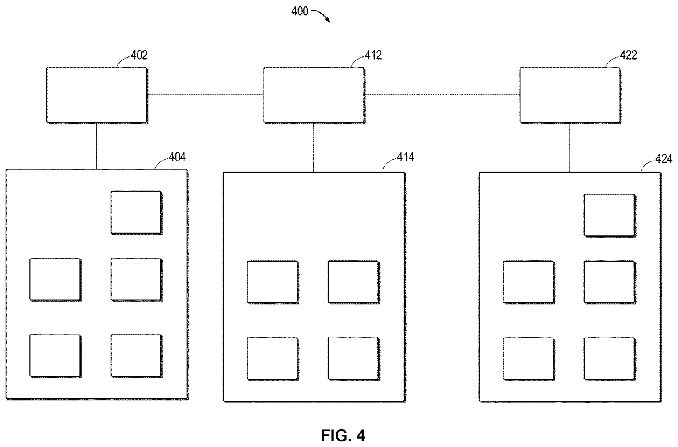

FIG. 4 shows a schematic view of a hardware structure 400 of a roadside system, consistent with examples of the present disclosure. As shown in FIG. 4, hardware structure 400 may include a router 402, an intersection chassis 404, a router 412, an intersection chassis 414, a router 422, and an intersection chassis 424. For example, the router 402 and the intersection chassis 404 are located at a roadside location for roadside service, and the intersection chassis 404 may include multiple nodes (i.e., a host computer). The router is used to connect all of the host computers in the intersection chassis at different intersections to ensure communication between the intersections. In addition, a switch (not shown) is included in each intersection chassis to connect all of the hosts in the intersection chassis within the same intersection to ensure connectivity of the devices within the intersection. The host in the intersection chassis performs the deployed roadside service and is the computing unit of the roadside system.

In some examples, the environmental information is provided to a plurality of nodes of the cluster for roadside service by a sensor installed at a roadside location of each cluster. For example, a camera is installed at a roadside position of the intersection chassis 404 to capture image information for the surrounding environment and to send the image information to a host in the intersection chassis 404 to perform the related roadside services.

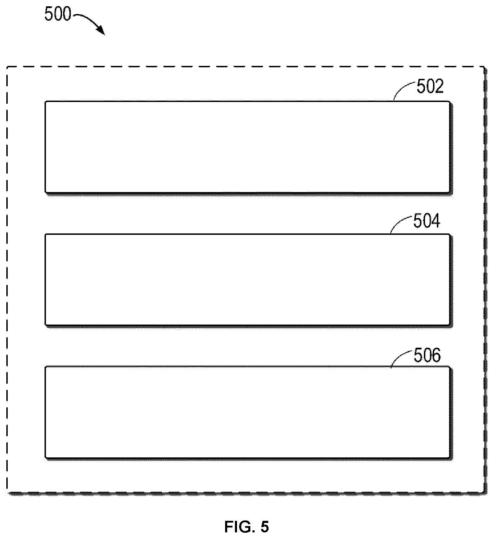

FIG. 5 shows a schematic diagram illustrating a service deployment device 500, consistent with examples of the present disclosure. The device 500 includes a user input receiving module 502 configured to receive user inputs for deploying services in a roadside system, wherein the roadside system includes a plurality of clusters located at different roadside locations and edge servers for managing the plurality of clusters, each cluster including one or more nodes for performing roadside services. The device 500 also includes a list file conversion module 504 configured to switch the user input to a list file, wherein the list file indicates a roadside service to be deployed and deployment information related to the roadside service. The device 500 also includes a service deployment execution module 506 configured to deploy the roadside service using an orchestration server in the edge server based on the deployment information in the list file.

In some examples, the inventory file conversion module comprises: A user input reading module configured to read a mirror address and the deployment information in a mirror library of the roadside service to be deployed from the user input on the edge server, wherein the deployment information comprises at least a deployment cluster, a deployment node and service parameters related to the roadside service; and a list file generation module configured to generate the list file based on the mirror address, the deployment cluster, the deployment node and the service parameters.

In some examples, wherein the service deployment execution module comprises: A mirror service acquisition module configured to acquire a mirror service corresponding to the roadside server from the mirror address in the mirror library; a mirror service configuration module configured to configure the mirror service based on the service parameters; and a roadside service deployment module configured to deploy the mirror service as the roadside service to the deployment node through an orchestration agent on the deployment node in the deployment cluster.

In some examples, the device 500 further comprises: A backup service deployment module configured to deploy the mirror service as the roadside service to a plurality of backup deployment nodes in the deployment cluster.

In some examples, wherein the roadside system further comprises a plurality of backup edge service servers, each of the plurality of backup edge servers including a mirror library and a backup orchestration server synchronized with the orchestration server.

In some examples, the device 500 further comprises: A server replacement module configured to replace the edge server with a backup edge server of the plurality of backup edge servers in response to the edge server failure.

In some examples, the device 500 further comprises: A status information acquisition module configured to acquire a hardware status corresponding to the nodes of the plurality of nodes and a service status of a roadside service being executed on the plurality of nodes through a probe disposed in a node; and a status information display module configured to display the hardware status and the described service status in a user interface.

In some examples, the device 500 further comprises: A status information storage module configured to store the hardware status and the service status into a database through a monitor in the edge server; and a time series display module configured to display the time series data in a user interface by querying the database from the hardware status and the service status.

In some examples, wherein the user interface is web-based and bound to a monitor in the edge server that alerts a user when the hardware status and/or the service status indicates a failure.

In some examples, in response to the monitor indicating that the roadside service failed, the device 500 further comprises one of: A roadside service restart module configured to restart the roadside service on the said deployed node; a backup service start module configured to start the roadside service on one of the said plurality of backup deployment nodes; or, a roadside service migration module configured to migrate the roadside service from the said node to another node in the said deployment cluster.

In some examples, the device 500 further comprises: An environmental information acquisition module configured to acquire environmental information by a sensor installed at the roadside location where each cluster is located; and an environmental information provision module configured to provide the environmental information to a plurality of nodes of the cluster for the roadside services.

In some examples, the plurality of nodes on each cluster are connected by a switch and the plurality of clusters are connected by a router.

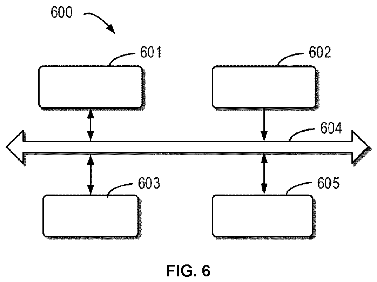

FIG. 6 illustrates a schematic block diagram of an exemplary device 600 suitable for implementing the examples of the present disclosure. As shown in the figure, the device 600 comprises a processor 601, which can execute various appropriate actions and processes according to computer program instructions stored in a read-only memory (ROM) 602 and loaded into a random access memory (RAM) 603. Various programs and data required for the operation of the device 600 may also be stored in the RAM 603. The processor 601, ROM 602, and RAM 603 are interconnected via a bus 604. An input/output (I/O) interface 605 is also connected to the bus 604.

The various methods and processes described above may be executed by the processor 601. For example, in some examples, the various methods and processes described above may be implemented as computer software programs tangibly embodied in a machine-readable medium. In some examples, part or all of the computer programs may be loaded and/or installed onto the device 600 through the ROM 602. When the computer program is loaded into the RAM 603 and executed by the processor 601, one or more actions of the methods and processes described above may be performed.

The present disclosure may be a method, device, system and/or computer program product. The computer program product may comprise a computer-readable storage medium uploaded with computer-readable program instructions for performing various aspects of the present disclosure.

The computer-readable storage medium may be a tangible device that maintains and stores instructions used by instruction execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: random access memory (RAM), read-only memory (ROM), erasable programmable read-only memory (EPROM or flash memory), static random access memory (SRAM), and any suitable combination of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein can be downloaded to respective computing/processing devices from a computer-readable storage medium or to an external computer or external storage device via a network, for example, the Internet, a local area network, a wide area network, and/or a wireless network. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. In the case of remote computers, the remote computer can be connected to the user's computer through any type of network - such as a local area network (LAN) or a wide area network (WAN) - or can be connected to an external computer (for example, through the Internet using an Internet Service Provider). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, devices (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, a device that realizes the functions/actions stipulated in one or more boxes in the flow charts and/or block diagrams is produced. These computer-readable program instructions may also be stored in computer-readable storage medium, enabling computers, programmable data processing devices, and/or other devices to operate in a specific manner. Therefore, the computer-readable media containing instructions comprise a manufactured product that includes instructions for implementing various aspects of the functions/actions specified in one or more boxes in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples or the technological improvements in the market or to allow others skilled in the art to understand the various examples disclosed in this text.

## Claims

1. A method (200) for deploying a service, comprising:
receiving (202) a user input to deploy a service in a roadside system, wherein the roadside system includes a plurality of clusters located at different roadside locations and edge servers for managing the plurality of clusters, each cluster including one or more nodes for performing roadside services;
converting (204) the user input into a list file, wherein the list file refers to a roadside service to be deployed and deployment information related to the roadside service; and
utilizing an orchestration server (206) in the edge server to deploy roadside service based on the deployment information in the list file.

2. The method (200) according to claim 1, wherein switching the user input to the inventory file comprises:
reading, with a coordination in the edge server from the user input, a mirror address in a mirror library of the roadside services to be deployed in the edge server, and the deployment information, wherein the deployment information includes at least a deployment cluster associated with the roadside services, a deployment node, and service parameters; and
generating the list file based on the mirror address, the deployment cl uster, the deployment node, and the server parameters.

3. The method (200) according to claim 2, wherein deploying the roadside services with the orchestration service comprises:
obtaining a mirror service corresponding to the roadside service from the mirror address in the mirror library;
configuring the mirroring service based on the service parameters; and
deploying the mirror service as the roadside service to the deployment node through the orchestration agent on the deployment node in the deployment cluster.

4. The method (200) according to claim 3, further comprising:
deploying the mirroring service as the roadside service to multiple backup deployment nodes in the deployment cluster.

5. The method (200) according to claim 1, wherein the roadside system further comprises a plurality of backup edge servers, each of the plurality of backup edge servers including a mirror library and a backup orchestration server synchronized with the orchestration server.

6. The method (200) according to claim 5, further comprising:
replacing the edge server with a backup edge server of the plurality of backup edge servers in response to the edge server failure.

7. The method (200) according to claim 1, further comprising:
obtaining, by a probe disposed in a node, a hardware status of corresponding to a node of the plurality of nodes and a service status of a roadside service executing on the plurality of nodes; and displaying the hardware status and the service status in a user interface.

8. The method (200) according to claim 7, further comprising:
storing the hardware status and the service status in a database through a monitor in the edge server; and
displaying the time series data in the user interface by querying the database for time series data including the hardware status and the service status.

9. The method (200) according to claim 8, wherein the user interface is based on and bound to a web page, the monitor alerting a user when the hardware status and/or the described service status indicates a fault.

10. The method (200) according to claim 9, further comprising, in response to the monitor indicating the roadside service failure, performing one of:
restarting the roadside service on the deployment node;
initiating the roadside service on one of the plurality of backup deployment nodes; or
migrating the roadside service from the deployment node to another node in the deployment cluster.

11. The method (200) according to claim 1, further comprising:
obtaining environmental information by a sensor installed at the roadside location where each cluster is located; and
providing the environmental information to a plurality of nodes of the cluster for the roadside services.

12. The method (200) according to claim 11, wherein the plurality of nodes on each cluster are connected by a switch and the plurality of clusters are connected by a router.

13. A device for deploying a service, comprising:
a user input receiving module, configured to receive user inputs for deploying services in a roadside system, wherein the roadside system includes a plurality of clusters located at different roadside locations and edge servers for managing the plurality of clusters, each cluster including one or more nodes for performing roadside services;
a list file conversion module, configured to convert the user input to a list file, wherein the list file indicates a roadside service to be deployed and the deployment information related to the roadside service; and
a service deployment execution module, configured to deploy the roadside service using an orchestration server in the edge server based on the deployment information in the list file.

14. An edge server, comprising:
at least one processor, and
a memory, coupled to the at least one processor, and having instructions stored thereon, wherein the instructions, when executed by the at least one processor, cause the edge server to perform the method according to any one of claims 1 to 12.

15. A computer program product that is tangibly stored on a non-transitory computer-readable medium and includes machine-executable instructions that are used to execute the method according to any one of claims 1 to 12.
